# EUROPÄISCHE PATENTANMELDUNG

(11) **EP 1 005 824 A2**
(43) Veröffentlichungstag der Anmeldung: **07.06.2000**
(21) Anmeldenummer: 99123410.5
(22) Anmeldetag: 24.11.1999
(51) Int. Cl.: A47L 9/14

(54) **Filterbeutel**

(30) Priorität: 02.12.1998 DE 29821528 U
(71) Anmelder: MELITTA HAUSHALTSPRODUKTE GmbH & Co. Kommanditgesellschaft, D-32427 Minden (DE)
(72) Erfinder: Miller, Balthasar, 29499 Zernien (DE)
(74) Vertreter: Stracke, Alexander, Dipl.-Ing.

(57) **Zusammenfassung**

Ein in einen Staubsauger einsetzbaren Filterbeutel, der im wesentlichen aus einer Halteplatte und einem Staubbeutel besteht , soll so gestaltet werden, daß sich der Filterbeutel optimal dem Stützraum des Staubsaugers anpassen kann, so daß ein optimales Füllvermögen gewährleistet ist.

Erfindungsgemäß ist die äußere Filterpapierlage (15) mit Sollbiegelinien (16) versehen, die ein Muster bilden. Im Bereich der Sollbiegelinien (16) ist die Normaldicke des Filterpapieres reduziert. Diese Sollbiegelinien sind in bevorzugter Ausführung Perforationslinien, die durch Behandlung mittels eines thermischen Werkzeuges gebildet sind.

Der Filterbeutel ist besonders für Haushaltsstaubsauger geeignet.

## Beschreibung

Die Erfindung betrifft einen Filterbeutel, der in einem Stützraum eines Staubsaugers einsetzbar ist und der im wesentlichen aus einer Halteplatte und einem daran befestigen Staubbeutel besteht, der aus wenigstens einer Filterpapierlage gefertigt ist. Der in Frage kommende Filterbeutel ist in vielen Ausführungen je nach der Gestaltung des Staubsaugers bekannt und wird allgemein auch als Staubsaugerbeutel bezeichnet. Viele Filterbeutel bestehen aus zwei Filterpapierlagen. Der Staubbeutel ist im Normalfall ein offener Klotzbodenbeutel, dessen mit einer Einströmöffnung versehener Boden an der Halteplatte angeklebt wird. Das gegenüberliegende offene Ende wird durch ein oder mehrmaliges Umfalten und Verkleben verschlossen. Im aufgeblasenen Zustand ergibt sich dann in Längsrichtung des Beutels eine Keilform. Es ist nun gewünscht, daß sich der aufgeblasene Filterbeutel an die Form des Stützraumes des Staubsaugers anpaßt, um das Füllvermögen des Filterbeutels optimal nutzen zu können. Dazu ist es bereits bekannt, ein weiches Bindemittel oder einen Weichmacher, zum Beispiel Glitzerin oder Wasser zu verwenden. Ferner ist es bekannt, den Filterbeutel aus gekreppten Filterpapieren herzustellen, wobei sich allerdings der Nachteil ergibt, daß diese nur in der einen Richtung flexibler werden, während jedoch in der anderen Richtung die Steifigkeit erhöht wird.

Der Erfindung liegt die Aufgabe zugrunde, einen Filterbeutel der eingangs näher beschriebenen Art so auszubilden, daß sich der Filterbeutel optimal dem Stützraum des Staubsaugers anpaßt, so daß das Füllvermögen optimal ist.

Die gestellte Aufgabe wird gelöst, indem zumindest eine Filterpapierlage, vorzugsweise die äußere Filterpapierlage mit ein Muster bildenden Sollbiegelinien mit jeweils einer gegenüber der Normaldicke des Filterpapiers reduzierten Dicke versehen ist .

Im Normalfall wird ausschließlich die äußere Filterpapierlage mit den Sollbiegelinien versehen. Im Bedarfsfall wird aber auch die innere Filterpapierlage mit den Sollbiegelinien versehen, sofern der Filberbeutel aus mehreren Lagen besteht. Zur Untersützung der dauernden Prägung können diese auch beheizt sein, was besonders bei Filterpapieren von großem Vorteil ist, die mit Latex imprägniert sind.

Das Muster kann vielfältig gestaltet sein. Da das Filterpapier luftdurchlässig ist, ist es verhältnismäßig voluminös. Deshalb lassen sich die Sollbiegelinien einfach in das Filterpapier einbringen. Dies kann beispielsweise durch Prägewalzen erfolgen. Durch die Vielzahl der Sollbiegelinien wird die Anpassung des Filterbeutels an den Stützraum wesentlich erleichtert . Da die Biegelinien äußerst schmal sind, wird die Filterwirkung der Filterpapierlage, wenn überhaupt, dann nur unwesentlich beeinflußt. In einer ersten Ausführungsform sind die Sollbiegelinien als Perforationslinien ausgebildet. Dies kann durch eine gezielte Bearbeitung mittels Prägewalzen erfolgen. Diese Möglichkeit kommt insbesondere bei voluminösen Flächenmaterial zur Anwendung, da solche Materialien auch thermisch verformbar sind. In anderen Ausführungsformen ist vorgesehen, daß das Muster aus sich kreuzenden Linien gebildet ist. Dadurch wird eine optimale Verformung des aufgeblasenen Filterbeutels erreicht. Dabei können die sich kreuzenden Sollbiegelinien parallel und quer zu den Längskanten des Filterbeutels verlaufen. Es ist jedoch auch möglich, daß zur Bildung eines Rautennetzes die Sollbiegelinie sich zwar kreuzt, jedoch schräg zu den Längskanten verlaufen. Darüber hinaus ist es ebenfalls möglich, daß die Sollbiegelinien wellenförmig ausgebildet sind, wobei zwischen den einzelnen Sollbiegelinien noch Punkte, Kreise oder dergleichen mit gegenüber der Normaldicke reduzierter Dicke liegen können. Die Muster sind nicht auf spezielle Formen begrenzt, da bei Textilien bekannte Muster ohne weiteres verwendet werden können.

Anhand der beiliegenden Zeichnungen wird die Erfindung noch näher erläutert.

Es zeigen:
- Figur 1: einen erfindungsgemäßigen Filterbeutel im aufgeblasenen Zustand, jedoch nicht in den Stützraum eines Staubsaugers eingesetzt,
- Fig. 2 - 4: Ausschnitte einer Filterpapierlage bei denen die Sollbiegelinien drei verschiedene Muster bilden und
- Figur 5: einen Teilschnitt durch die Filterpapierlage in vergrößerter Darstellung.

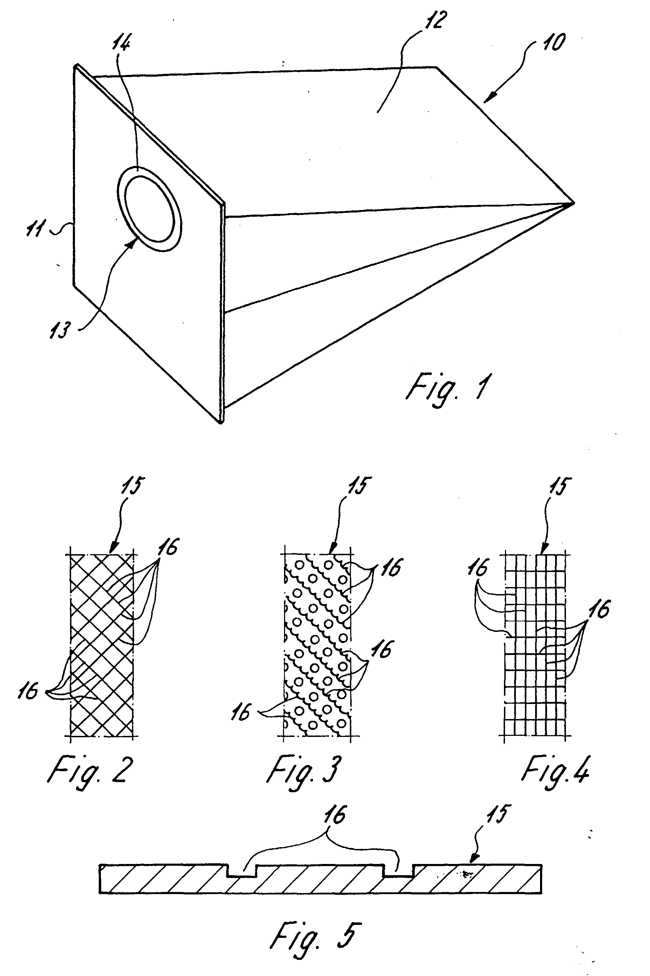

Der in der Figur 1 dargestellte Filterbeutel 10 besteht im wesentlichen aus einer aus Karton gefertigten Halteplatte 11, dem aus einem Filterpapier gefertigten Staubbeutel 12 , der als Klotzbodenbeutel ausgebildet ist und dessen Boden eine Einströmöffnung aufweist, die deckungsgleich zu einer Einströmöffnung 13 der Halteplatte 11 liegt. Zwischen dem Boden und der Halteplatte 11 ist noch ein Dichtring 14 aus einem elastischen Material vorgesehen, dessen Bohrung geringer ist als die Einströmöffnung 13. In der Figur 1 ist zwar der Staubbeutel 12 im aufgeblasenen Zustand dargestellt, jedoch nicht an die sich aus der Form des Stützraumes ergebende Kontur. Die tatsächliche Form kann vielfältig sein, bedingt durch die besondere Filterpapierlage 15 entsprechend den Figuren 2 - 5. Aus diesen Figuren geht hervor, daß die Filterpapierlage 15 mit einer Vielzahl von Sollbiegelinien 16 versehen ist. Diese Sollbiegelinien sind verhältnismäßig schmal und liegen in einem, bezogen auf die Breite und Länge des Staubbeutels 12 geringen Abstand zueinander. Je nach Verlauf der Sollbiegelinien 16 ergeben sich verschiedene Muster von denen die in den Figuren 2 - 4 dargestellten nur als Beispiel zu sehen sind. Bei den Ausführungen nach den Figuren 2 - 4 verlaufen die Sollbiegelinien 16 im rechten Winkel zueinander, wobei sie nach der Figur 2 schräg zu den Längskanten des Staubbeutels 12 verlaufen, während sie bei der Ausführung nach der Figur 4 parallel und quer zu den Längskanten des Staubbeutels 12 verlaufen. Bei der Ausführung nach der Figur 2 sind die Abstände der sich kreuzenden Sollbiegelinien gleich, während bei der Ausführung nach der Figur 4 die Abstände unterschiedlich sind. Bei der Ausführung nach der Figur 3 verlaufen die Sollbiegelinien in einer Wellenform zueinander. Im dargestellten Ausführungsbeispiel verlaufen sie entsprechend der Ausführung nach der Figur 2 ebenfalls schräg zu den Längskanten des Staubbeutels 12. Zwischen den einzelnen Sollbiegelinien 16 sind noch zusätzliche Kreise vorgesehen, die ebenfalls die Dicke des Filterpapiers reduzieren. Die Figur 5 zeigt, daß die Sollbiegelinien 16 gegenüber den Abständen zwischen zwei Linien äußerst schmal sind. Außerdem ergibt sich, daß die Tiefe jeder Sollbiegelinie 16 etwa 1/3 der Dicke des nicht behandelten Filterpapiers beträgt.

## Patentansprüche

1. Filterbeutel der in einen Stützraum eines Staubsauger einsetzbar ist und der im wesentlichen aus einer Halteplatte und einem daran befestigten Staubbeutel besteht, der aus wenigstens einer Filterpapierlage gefertigt ist, **dadurch gekennzeichnet, daß** zumindest eine, vorzugsweise die äußere Filterpapierlage (15) mit ein Muster bildenden Sollbiegelinien (16) mit jeweils einer gegenüber der Normaldicke des Filterpapiers reduzierten Dicke versehen ist.

2. Filterbeutel nach Anspruch 1, **dadurch gekennzeichnet, daß** die Sollbiegelinien (16) als Perforationslinien ausgebildet sind.

3. Filterbeutel nach Anspruch (1) oder (2), **dadurch gekennzeichnet, daß** die Sollbiegelinien (16) durch Behandlung mittels eines thermischen Werkzeuges gebildet sind.

4. Filterbeutel nach einem oder mehreren der vorgehenden Ansprüche 1 bis 3, **dadurch gekennzeichnet, daß** die Sollbiegelinien (16) sich kreuzen.

5. Filterbeutel nach Anspruch 4, **dadurch gekennzeichnet, daß** die sich kreuzenden Sollbiegelinien (16) parallel und quer zu den Seitenkanten des Staubbeutels (12) verlaufen.

6. Filterbeutel nach Anspruch 4, **dadurch gekennzeichnet, daß** die sich kreuzenden Sollbiegelinien (16) schräg, vorzugsweise unter einem Winkel von 45 Grad zu den Seitenkanten des Staubbeutels (12) verlaufen.

7. Filterbeutel nach einem der vorhergehenden Ansprüche 4 - 6, **dadurch gekennzeichnet, daß** die Abstände zwischen den sich kreuzenden Sollbiegelinien (16) gleich oder unterschiedlich sind.

8. Filterbeutel nach einem oder mehreren Ansprüche 1 - 3, **dadurch gekennzeichnet, daß** die Sollbiegelinien (16) nach Art einer Wellenform verlaufen, und daß zwischen den einzelnen Sollbiegelinien (16) Punkte oder Kreise mit einer gegenüber der unbehandelten Filterpapierlage geringeren Dicke vorgesehen sind.

9. Filterbeutel nach Anspruch 8, **dadurch gekennzeichnet, daß** die wellenförmigen Sollbiegelinien (16) schräg zu den Längskanten des Staubbeutels (12) verlaufen.

10. Filterbeutel nach Anspruch 9, **dadurch gekennzeichnet, daß** die Sollbiegelinien (16) derart angeordnet sind, daß sie zur Bildung einer vorbestimmten Beutelform, beispielsweise aus strömungstechnischen Gründen, unterstützend wirken.
